# EUROPÄISCHE PATENTANMELDUNG

(11) **EP 2 662 199 A1**
(43) Veröffentlichungstag der Anmeldung: **13.11.2013**
(21) Anmeldenummer: 13166580.4
(22) Anmeldetag: 06.05.2013
(51) Int. Cl.: B29C 67/00, C08L 77/06

(54) **Verfahren zur schichtweisen Herstellung von dreidimensionalen Objekten**

(30) Priorität: 08.05.2012 DE 102012207609
(71) Anmelder: Evonik Industries AG, 45128 Essen (DE)
(72) Erfinder: Diekmann, Wolfgang, 45731 Waltrop (DE); Grebe, Maik, 44805 Bochum (DE)

(57) **Zusammenfassung**

Die vorliegende Erfindung betrifft Verfahren zur schichtweisen Herstellung von dreidimensionalen Objekten, wobei ein Pulvermaterial enthaltend Polyamid PA613 verwendet wird sowie entsprechende Formkörper und die Verwendung des Pulvermaterials zur schichtweisen Herstellung dreidimensionaler Objekte.

## Beschreibung

Die vorliegende Erfindung betrifft ein Verfahren zur schichtweisen Herstellung von dreidimensionalen Objekten, die Verwendung von Polyamid 613 sowie entsprechende Formkörper.

Die zügige Bereitstellung von Prototypen ist eine in der jüngsten Zeit häufig gestellte Aufgabe. Verfahren die dies ermöglichen werden Rapid Prototyping/ Rapid Manufacturing oder auch Additive Fabrication-Verfahren genannt. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da die die aufgeschmolzenen Bereiche umgebende Baufeldebene ausreichende Stützwirkung bietet. Ebenso entfällt die Nacharbeit, Stützen zu entfernen. Die Verfahren sind auch für die Herstellung von Kleinserien geeignet. Die Bauraumtemperatur wird so gewählt, dass es während des Bauprozesses zu keinem Verzug der schichtweise hergestellten Strukturen kommt.

Ein Verfahren, welches besonders gut für den Zweck des Rapid Prototypings geeignet ist, ist das selektive Laser-Sintern (SLS). Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren schnell wieder zu einer festen Masse. Durch wiederholtes Belichten von immer neu aufgebrachten Schichten können mit diesem Verfahren dreidimensionale Körper einfach und schnell hergestellt werden.

Das Verfahren des Laser-Sinterns (Rapid Prototyping) zur Darstellung von Formkörpern aus pulverförmigen Polymeren wird ausführlich in der Patentschriften US 6,136,948 und WO 96/06881 (beide DTM Corporation) beschrieben. Eine Vielzahl von Polymeren und Copolymeren wird für diese Anwendung beansprucht, wie z.B. Polyacetat, Polypropylen, Polyethylen, lonomere und Polyamide.

Andere gut geeignete Verfahren sind in WO 01/38061, in EP 1015214, DE 10311438 oder WO 2005/105412 beschrieben.

Üblicherweise werden pulverförmige Polyamide wie Polyamid 12 (PA12) oder Polyamid 11 (PA11) für das Rapid Prototyping eingesetzt. Ein Problem der oben beschriebenen Verfahren ist, dass die mechanischen Kennwerte der hergestellten Bauteile (Formkörper) unbefriedigend sind. Materialien, die im Lasersintern verarbeitbar sind, weisen entweder ein hohes E-Modul und eine niedrige Reißdehnung oder eine hohe Reißdehnung und ein niedriges Elastizitätsmodul (E-Modul) auf. Für viele Anwendungen wäre eine Kombination von hohem E-Modul und hoher Reißdehnung wünschenswert.

Aufgabe der vorliegenden Erfindung ist daher, ein Verfahren zur schichtweisen Herstellung dreidimensionaler Objekte mit hohem E-Modul und hoher Reißdehnung sowie gleichzeitig hoher Zugfestigkeit bereitzustellen.

Überraschend wurde gefunden, dass Polyamid 613 (PA613) als eingesetztes Pulver im Verfahren zur schichtweisen Herstellung dreidimensionaler Objekte die gestellten Anforderungen erfüllt. Neben dem von spritzgegossenen Bauteilen bekannten höheren E-Modul eines PA613 wird beim Lasersintern, entgegen den vom Spritzguss bekannten Kennwerten dieses Polyamids, gleichzeitig die Reißdehnung und die Zugfestigkeit der hergestellten Bauteile erhöht. Die Lösung der Aufgabe durch Polyamid PA 613 ist insbesondere deshalb überraschend, da die für das Rapid Prototyping üblicherweise eingesetzten Polyamide PA11 bzw. PA12 diesen Anforderungen nicht genügen.

In einer ganz besonders bevorzugten Ausführungsform der Erfindung wird ein Polyamid PA613 als Pulvermaterial verwendet.

Gegenstand der vorliegenden Erfindung ist demnach ein Verfahren zur schichtweisen Herstellung von dreidimensionalen Objekten, wobei ein Pulvermaterial enthaltend ein Polyamid PA613 verwendet wird. Insbesondere bevorzugt sind Verfahren zur schichtweisen Herstellung von dreidimensionalen Objekten, wobei das Verfahren in einer Vorrichtung umfassend einen Bauraum (10) mit einer höheneinstellbaren Bauplattform (6), einer Vorrichtung (7) zum Aufbringen des Polyamids (einer Schicht eines durch Einwirkung elektromagnetischer Strahlung verfestigbaren PA613 Pulvers) auf die Bauplattform (6), einer Bestrahlungseinrichtung umfassend eine elektromagnetische Strahlung emittierende Strahlungsquelle (1), einer Steuerungseinheit (3) und einer im Strahlengang der elektromagnetischen Strahlung befindlichen Linse (8 durchgeführt wird. Die Linse (8) eignet sich zum Bestrahlen von dem Objekt (5) entsprechenden Stellen der Schicht.

Polyamid 613 ist gemäß der Nomenklatur ISO 1874-1 ein aliphatisches Polyamid des AABB-Typs. Es ist aus Hexamethylendiamin und Brassylsäure herstellbar. Diamin und Dicarbonsäure können in äquimolaren Mengen eingesetzt werden; es ist jedoch auch möglich, entweder das Diamin oder die Dicarbonsäure im Überschuss einzusetzen.

Geeignete Polyamide der vorliegenden Erfindung weisen ein zahlenmittleres Molekulargewicht von 8000 bis 50000 g/mol auf, gemessen durch Gelpermeationschromatographie gegen Styrolstandard.

Ein bevorzugtes PA613-Pulver weist vorzugsweise unabhängig voneinander zumindest einen der folgenden Parameter, vorzugsweise alle Parameter, auf, wobei die jeweiligen Prüfparameter in den Tabellen 3 bis 5 angegeben sind.
Schüttdichte: 0,35 bis 0,55 g/cm³
Korngröße (d50): 30 bis 80 µm, bevorzugt 40 bis 75 µm
Rieselfähigkeit: maximal 70 s, bevorzugt 20 bis 30 s
Lösungsviskosität: 1,5 bis 2,2, bevorzugt 1,55 bis 2
BET: 0,01 bis 30 m²/g, bevorzugt 0,1 bis 20 m²/g, besonders bevorzugt 0,5 bis 20 m²/g und ganz besonders bevorzugt 0,75 bis 10 m²/g
Schmelzpunkt (1. Aufheizung): 205 bis 215 °C, bevorzugt 207 bis 213 °C Rekristallisationstemperatur:150 bis 200 °C, bevorzugt 155 bis 190 °C, besonders bevorzugt 158 bis 180 °C.

Das Pulvermaterial kann mindestens 47 Gew.-% Polyamid 613 enthalten. Vorzugsweise sind mindestens 75 Gew.-%, bevorzugt mindestens 85 Gew.-%, besonders bevorzugt mindestens 90 Gew.-%, ganz besonders bevorzugt mindestens 95 Gew.-% und insbesondere mindestens 97 Gew.-% enthalten, jeweils bezogen auf das Gesamtgewicht des Pulvermaterials.

Das Pulvermaterial kann Füllstoffe wie Glaskugeln enthalten. Die Füllstoffe können in einem Anteil von bis zu 50 Gew.-%, bezogen auf das Gesamtgewicht des Pulvermaterials, enthalten sein.

Weiterhin können bis zu 3 Gew.-% Hilfsstoffe, bezogen auf das Gesamtgewicht des Pulvermaterials, enthalten sein. Derartige Hilfsstoffe und deren Anteile sind dem Fachmann bekannt. Zu den Hilfsstoffen zählen beispielsweise Rieselhilfen (bevorzugter Anteil: maximal 0,5 Gew.-%), Katalysatoren (bevorzugter Anteil: max. 1 Gew.-%) und Stabilisatoren (bevorzugter Anteil: max. 1 Gew.-%; jeweils bezogen auf das Gesamtgewicht des Pulvermaterials).

Darüber hinaus können andere Polymere, insbesondere andere Polyamide im Pulvermaterial enthalten sein. Ihr Anteil ist vorzugsweise geringer als 10 Gew.-%, bevorzugt weniger als 5 Gew.-% und besonders bevorzugt geringer als 2 Gew.-%. Ganz besonders bevorzugt ist kein anderes Polymer neben PA613 im Pulvermaterial enthalten.

Ein weiterer Gegenstand der Erfindung ist die Verwendung des zuvor definierten Pulvermaterials enthaltend PA613 zur schichtweisen Herstellung dreidimensionaler Objekte.

Ein weiterer Gegenstand der Erfindung sind Formkörper, die durch das erfindungsgemäße Verfahren erhalten werden. Das E-Modul der Formkörper beträgt vorzugsweise mindestens 2000 MPa, bevorzugt mindestens 2200 MPa. Weiterhin weisen die Formkörper vorzugsweise eine Reißdehnung von mindestens 30 % auf. Darüber liegt die Zugfestigkeit vorzugsweise mindestens bei 50 MPa, bevorzugt mindestens bei 54 MPa. In einer besonders bevorzugten Ausführungsform der Erfindung weisen die Formkörper gleichzeitig ein E-Modul von mindestens 2000 MPa, ganz besonders bevorzugt mindestens 2200 MPa, eine Reißdehnung von mindestens 30 % und eine Zugfestigkeit von mindestens 50 MPa, ganz besonders bevorzugt mindestens 54 MPa, auf. Die Messungen werden an Formkörpern durchgeführt, die 24 h bei einem Druck von 1013 hPa, einer Temperatur von 20 °C und einer relativen Luftfeuchtigkeit von 50 % gelagert wurden.

Für die Eignung als Pulvermaterial in Verfahren zur schichtweisen Herstellung dreidimensionaler Objekte sind die oben genannten Untergrenzen bevorzugt einzuhalten. Eine Obergrenze ist für die Eignung nicht zwingend festzulegen und hängt insbesondere von den technischen Möglichkeiten ab. Die genannten Werte können insbesondere durch die Zugabe von Füllstoffen angehoben werden.

Pulvermaterial enthaltend mindestens 97 Gew.-% Polyamid 613 können Obergrenzen von 2500 MPa (E-Modul) und 65 MPa (Zugfestigkeit) erreichen. Je nach Füllstoffart und -anteil können E-Module von bis zu 4000 MPa erhalten werden.

Die mechanischen Kennwerte diese Formkörper (E-Modul, Reißdehnung und Zugfestigkeit) werden gemäß DIN EN ISO 527 ermittelt. Hierzu werden eine Prüfgeschwindigkeit von 50 mm/min, eine Prüfgeschwindigkeit E-Modul 1 mm/min, eine Einspannlänge bei Startposition von 115 mm, eine Messlänge von 50 mm als Standardweg, der Beginn der E-Modulermittlung bei 0,05 % und das Ende der E-Modulermittlung bei 0,25 % festgelegt. Die Messungen erfolgen auf einer Zugprüfmaschine der Fa. Zwick Roell, Deutschland, mit parallelen Spannbacken.

Im Folgenden werden die erfindungsgemäßen Verfahren näher beschrieben, mit denen aus Pulver erfindungsgemäße Formteile hergestellt werden können, ohne dass die Erfindung darauf beschränkt werden soll.

Im Betrieb werden zunächst in der Regel in einem Rechner aufgrund eines Konstruktionsprogramms oder dergleichen Daten über die Form des herzustellenden Objekts (Formkörper 5) erstellt bzw. abgespeichert. Diese Daten werden für die Herstellung des Objekts so aufbereitet, dass das Objekt in eine Vielzahl von horizontalen, im Vergleich zur Objektdimension dünnen Schichten zerlegt wird, und die Formdaten beispielsweise in Form von Datensätzen, z. B. CAD-Daten, für jede dieser Vielzahl von Schichten bereitgestellt werden. Die Erstellung und Aufbereitung der Daten für jede Schicht kann dabei vor der Herstellung oder auch gleichzeitig mit der Herstellung jeder Schicht erfolgen.

Anschließend wird zunächst die Bauplattform (6) mittels der Höheneinstellvorrichtung in die höchste Stellung gefahren, in der die Oberfläche der Bauplattform (6) in einer Ebene mit der Oberfläche des Bauraumes liegt, und anschließend um den Betrag der vorgesehenen Dicke der ersten Materialschicht abgesenkt, sodass innerhalb des entstehenden Ausschnitts ein abgesenkter Bereich gebildet ist, der seitlich von den Wänden des Ausschnitts und unten von der Oberfläche der Bauplattform (6) begrenzt ist. Mittels der Aufbringvorrichtung (7) wird sodann eine erste Schicht des zu verfestigenden Materials mit der vorgesehenen Schichtdicke in den vom Ausschnitt und der Bauplattform (6) gebildeten Hohlraum bzw. den abgesenkten Bereich eingebracht und gegebenenfalls von einer Heizung auf eine geeignete Arbeitstemperatur, beispielsweise 100 °C bis 360 °C, vorzugsweise 120 °C bis 210 °C und besonders bevorzugt 190 °C bis 205 °C, erwärmt. Bei der Verarbeitung eines PA613 kann eine Verarbeitungstemperatur von mindestens 190 °C vorteilhaft bezüglich der Verzugsneigung und der mechanischen Kennwerte der Bauteile sein. Daraufhin steuert die Steuereinheit (3) die Ablenkeinrichtung derart, dass der abgelenkte Lichtstrahl (2) nacheinander an allen Stellen der Schicht auftrifft und dort das Material sintert bzw. aufschmilzt. Auf diese Weise kann zunächst eine feste Bodenschicht gebildet werden. In einem zweiten Schritt wird die Bauplattform (6) mittels der Höheneinstellvorrichtung um den Betrag einer Schichtdicke abgesenkt und mittels der Aufbringvorrichtung (7) in den damit entstehenden abgesenkten Bereich innerhalb des Ausschnittes eine zweite Materialschicht eingebracht, ggf. wiederum von der Heizung erwärmt.

In einer Ausführungsform kann die Ablenkeinrichtung diesmal von der Steuereinheit (3) derart gesteuert werden, dass der abgelenkte Lichtstrahl (2) nur auf dem an die Innenfläche des Ausschnittes angrenzenden Bereich der Materialschicht auftrifft und dort die Materialschicht durch Sintern verfestigt, wodurch eine erste ringförmige Wandschicht mit einer Wandstärke von etwa 2 bis 10 mm entsteht, die das verbleibende pulverförmige Material der Schicht vollständig umgibt. Dieser Teil der Steuerung stellt damit eine Einrichtung zum Erzeugen einer das zu bildende Objekt (5) umgebenden Behälterwand gleichzeitig mit der Bildung des Objekts in jeder Schicht dar.

Nach Absenken der Bauplattform (6) um den Betrag der Schichtdicke der nächsten Schicht, Aufbringen des Materials und Aufheizen in der gleichen Weise wie oben kann nun die Herstellung des Objekts (5) selbst beginnen. Hierzu steuert die Steuereinheit (3) die Ablenkeinrichtung derart, dass der abgelenkte Lichtstrahl (2) an solchen Stellen der Schicht auftrifft, die entsprechend den in der Steuereinheit gespeicherten Koordinaten des herzustellenden Objekts (5) verfestigt werden sollen. Bei den weiteren Schichten wird analog vorgegangen. Im Falle der gewünschten Herstellung eines ringförmigen Wandbereichs in Form einer Behälterwand, die das Objekt zusammen mit dem verbleibenden, nicht gesinterten Material umschließt und so beim Absenken der Bauplattform (6) unter den Arbeitstisch ein Austreten des Materials verhindert, wird bei jeder Objektschicht mittels der Einrichtung eine ringförmige Wandschicht auf die darunterliegende ringförmige Wandschicht aufgesintert. Auf die Erstellung der Wand kann verzichtet werden, wenn ein Wechselbehälter entsprechend EP 1037739 oder ein fest eingebauter Behälter verwendet wird.

Nach Abkühlung kann das gebildete Objekt aus der Vorrichtung entnommen werden.

Die mit den erfindungsgemäßen Verfahren hergestellten dreidimensionalen Objekte oder Bauteile sind ebenfalls Gegenstand der vorliegenden Erfindung.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert. Alternative Ausführungsformen der vorliegenden Erfindung sind in analoger Weise erhältlich.

### Beispiele:

Die Beispiele werden, wenn nicht anders angegeben, der folgenden Beschreibung entsprechend bearbeitet. Die Baukammer wird 180 min auf eine Temperatur vorgeheizt, die 20°C unterhalb der Prozesstemperatur liegt. Danach wird die Temperatur in der Baukammer auf die Prozesstemperatur erhöht. Die Verteilung der Temperatur im Bauraum ist nicht immer homogen, daher wird die mittels Pyrometer gemessene Temperatur als Bauraum-/Prozesstemperatur definiert. Vor der ersten Belichtung werden 40 Schichten Pulver aufgetragen. Aus einem Laser (1) wird der Laserstrahl (2) mittels eines Scansystems (3) durch die Linse (8) auf die temperierte und inertisierte (N₂) Baufeldebene (4) gelenkt. Die Bauraumatmosphäre sollte einen Sauerstoffgehalt von weniger als 3 Vol.-%, bevorzugt weniger als 2 Vol.-% und besonders bevorzugt von weniger als 1 Vol.-% aufweisen.

Die zu belichtenden Bauteile werden zentral im Baufeld positioniert. Sechs Flächen in Form von Zugprüfkörpern gemäß DIN EN ISO 527 Typ1 B werden mittels des Laserstrahls aufgeschmolzen. Der Energieeintrag beträgt zwischen 20 und 80 mJ/mm². Danach wird die Bauplattform (6) um eine Schichtdicke abgesenkt und mittels einer Aufbringvorrichtung eine neue Pulverschicht mit einer Geschwindigkeit von 100 mm/s aufgetragen. Diese Schritte werden wiederholt, bis 6 Objekte mit einer Höhe von 4 mm entstehen. Nach Abschluss der Belichtung werden noch 40 weitere Schichten aufgetragen, bevor die Heizelemente ausgeschaltet und die Abkühlphase eingeleitet wird. Die Zeit, die jeweils für eine Schicht benötigte wird, liegt während des gesamten Bauprozesses unter 40s.

Nach einer Abkühlzeit von mindestens 12 Stunden wird das Bauteil entnommen und vom anhaftenden Pulver befreit. Die mechanischen Kennwerte dieser Bauteile werden gemäß DIN EN ISO 527 an einer Zwick Z020 (Prüfgeschwindigkeit 50 mm/min, Prüfgeschwindigkeit E-Modul 1 mm/min, Einspannlänge bei Startposition 115 mm, Messlänge Standardweg 50 mm, Beginn E-Modulermittlung 0,05 %, Ende E-Modulermittlung 0,25 %) ermittelt.

In der Tabelle 6 sind die Ergebnisse der Beispiele aufgeführt. Mit den konventionellen Pulverwerkstoffen PA11 und PA12 ist es selbst bei Variation der Prozessparameter nicht möglich Bauteile herzustellen, welche ein hohe Festigkeit und ein hohes E-Modul vorweisen können und zugleich auch eine hohe Reißdehnung haben. Mit einem PA613 Pulver hingegen können bei einer Vielzahl von Prozessparametervariationen Bauteile hergestellt werden, welche ein hohes E-Modul und eine hohe Festigkeit haben und zugleich eine hohe Reißdehnung.

### Beispiel 1 (nicht erfindungsgemäß)

Der Bauprozess wird auf einer EOSINT P360 der Firma EOS GmbH durchgeführt. Verarbeitet wird ein PA12-Pulver mit den Pulverkennwerten aus Tabelle 1. Das Pulver wird durch die Beschichtungsvorrichtung der EOSINT P360 aufgetragen. Die Schichtdicke beträgt 0,15mm. Die Prozesstemperatur beträgt 168 °C. Die Belichtungsparameter sind: Laserleistung 19,0 W, Scangeschwindigkeit 1100 mm/s, Abstand Belichtungslinien 0,3 mm.

### Beispiel 2 (nicht erfindungsgemäß)

Der Bauprozess wird auf einer EOSINT P380 der Firma EOS GmbH durchgeführt. Verarbeitet wird ein PA12-Pulver mit den Pulverkennwerten aus Tabelle 1. Das Pulver wird mit der Beschichtungsvorrichtung der EOSINT P380 aufgetragen. Die Schichtdicke beträgt 0,15mm. Die Prozesstemperatur beträgt 174 °C. Die Belichtungsparameter sind: Laserleistung 36,0 W, Scangeschwindigkeit 2000 mm/s, Abstand Belichtungslinien 0,3 mm.

### Beispiel 3 (nicht erfindungsgemäß)

Der Bauprozess wird auf einer EOSINT P395 der Firma EOS GmbH durchgeführt. Verarbeitet wird ein PA12-Pulver mit den Pulverkennwerten aus Tabelle 1. Das Pulver wird mit der Beschichtungsvorrichtung der EOSINT P395 aufgetragen. Die Schichtdicke beträgt 0,12mm. Die Prozesstemperatur beträgt 173 °C. Die Belichtungsparameter sind: Laserleistung 42,0 W, Scangeschwindigkeit 4000 mm/s, Abstand Belichtungslinien 0,3 mm.

### Beispiel 4 (nicht erfindungsgemäß)

Der Bauprozess wird auf einer EOSINT P395 der Firma EOS GmbH durchgeführt. Verarbeitet wird ein PA12-Pulver mit den Pulverkennwerten aus Tabelle 1. Das Pulver wird mit einer herkömmlichen Beschichtungsvorrichtung der EOSINT P395, aufgetragen. Die Schichtdicke beträgt 0,12mm. Die Prozesstemperatur beträgt 173 °C. Als Belichtungsparameter werden die Part Property Profiles EOS PA2200 Balance genutzt.

### Beispiel 5 (nicht erfindungsgemäß)

Der Bauprozess wird auf einer EOSINT P395 der Firma EOS GmbH durchgeführt. Verarbeitet wird ein PA12-Pulver mit den Pulverkennwerten aus Tabelle 1. Das Pulver wird mit einer herkömmlichen Beschichtungsvorrichtung der EOSINT P395, aufgetragen. Die Schichtdicke beträgt 0,10mm. Die Prozesstemperatur beträgt 173 °C. Als Belichtungsparameter werden die Part Property Profiles EOS PA2200 Performance genutzt.

### Beispiel 6 (nicht erfindungsgemäß)

Der Bauprozess wird auf einer SPro60 HDHS der Firma 3d-systems durchgeführt. Verarbeitet wird ein PA12-Pulver mit den Pulverkennwerten aus Tabelle 1. Das Pulver wird mit der Beschichtungsvorrichtung der SPro60 HDHS aufgetragen. Die Prozesstemperatur beträgt 167°C. Die Temperatur im Pulvervorrat beträgt jeweils 128°C. Die Belichtungsparameter sind: Laserleistung 54,0 W, Scangeschwindigkeit 12000mm/s, Abstand Belichtungslinien 0,3mm.

### Beispiel 7 (nicht erfindungsgemäß)

Der Bauprozess wird auf einer EOSINT P380 der Firma EOS GmbH durchgeführt. Verarbeitet wird ein PA11-Pulver mit den Pulverkennwerten aus Tabelle 2. Das Pulver wird mit der Beschichtungsvorrichtung der EOSINT P380 aufgetragen. Die Schichtdicke beträgt 0,15mm. Die Prozesstemperatur beträgt 183 °C. Die Belichtungsparameter sind: Laserleistung 36,0 W, Scangeschwindigkeit 2000 mm/s, Abstand Belichtungslinien 0,3 mm.

### Beispiel 8 (nicht erfindungsgemäß)

Der Bauprozess wird auf einer EOSINT P380 der Firma EOS GmbH durchgeführt. Verarbeitet wird ein PA11-Pulver mit den Pulverkennwerten aus Tabelle 2. Das Pulver wird mit der Beschichtungsvorrichtung der EOSINT P380 aufgetragen. Die Schichtdicke beträgt 0,12mm. Die Prozesstemperatur beträgt 184 °C. Die Belichtungsparameter sind: Laserleistung 19,0 W, Scangeschwindigkeit 1100 mm/s, Abstand Belichtungslinien 0,3 mm.

### Beispiel 9 (erfindungsgemäß)

Der Bauprozess wird auf einer EOSINT P360 der Firma EOS GmbH durchgeführt. Verarbeitet wird ein PA613-Pulver mit den Pulverkennwerten aus Tabelle 3. Das Pulver wird mit der Beschichtungsvorrichtung der EOSINT P360 aufgetragen. Die Schichtdicke beträgt 0,15mm. Die Prozesstemperatur beträgt 199 °C. Die Belichtungsparameter sind: Laserleistung 18,0 W, Scangeschwindigkeit 1000 mm/s, Abstand Belichtungslinien 0,3 mm.

### Beispiel 10 (erfindungsgemäß)

Der Bauprozess wird auf einer EOSINT P380 der Firma EOS GmbH durchgeführt. Verarbeitet wird ein PA613-Pulver mit den Pulverkennwerten aus Tabelle 3. Das Pulver wird mit der Beschichtungsvorrichtung der EOSINT P380 aufgetragen. Die Schichtdicke beträgt 0,15mm. Die Prozesstemperatur beträgt 196 °C. Die Belichtungsparameter sind: Laserleistung 36,0 W, Scangeschwindigkeit 2000 mm/s, Abstand Belichtungslinien 0,3 mm.

### Beispiel 11 (erfindungsgemäß)

Der Bauprozess wird auf einer EOSINT P395 der Firma EOS GmbH durchgeführt. Verarbeitet wird ein PA613-Pulver mit den Pulverkennwerten aus Tabelle 3. Das Pulver wird mit der Beschichtungsvorrichtung der EOSINT P395 aufgetragen. Die Schichtdicke beträgt 0,12mm. Die Prozesstemperatur beträgt 198 °C. Die Belichtungsparameter sind: Laserleistung 24,0 W, Scangeschwindigkeit 2000 mm/s, Abstand Belichtungslinien 0,3 mm.

### Beispiel 12 (erfindungsgemäß)

Der Bauprozess wird auf einer EOSINT P395 der Firma EOS GmbH durchgeführt. Verarbeitet wird ein PA613-Pulver mit den Pulverkennwerten aus Tabelle 3. Das Pulver wird mit der Beschichtungsvorrichtung der EOSINT P395 aufgetragen. Die Schichtdicke beträgt 0,12mm. Die Prozesstemperatur beträgt 198 °C. Die Belichtungsparameter sind: Laserleistung 32,0 W, Scangeschwindigkeit 4000 mm/s, Abstand Belichtungslinien 0,2 mm.

### Beispiel 13 (erfindungsgemäß)

Der Bauprozess wird auf einer EOSINT P395 der Firma EOS GmbH durchgeführt. Verarbeitet wird ein PA613-Pulver mit den Pulverkennwerten aus Tabelle 4. Das Pulver wird mit der Beschichtungsvorrichtung der EOSINT P395 aufgetragen. Die Schichtdicke beträgt 0,12mm. Die Prozesstemperatur beträgt 198 °C. Die Belichtungsparameter sind: Laserleistung 36,0 W, Scangeschwindigkeit 4000 mm/s, Abstand Belichtungslinien 0,3 mm.

### Beispiel 14 (erfindungsgemäß)

Der Bauprozess wird auf einer EOSINT P395 der Firma EOS GmbH durchgeführt. Verarbeitet wird ein PA613-Pulver mit den Pulverkennwerten aus Tabelle 4. Das Pulver wird mit der Beschichtungsvorrichtung der EOSINT P395 aufgetragen. Die Schichtdicke beträgt 0,10mm. Die Prozesstemperatur beträgt 198 °C. Die Belichtungsparameter sind: Laserleistung 32,0 W, Scangeschwindigkeit 4000 mm/s, Abstand Belichtungslinien 0,3 mm.

### Beispiel 15 (erfindungsgemäß)

Der Bauprozess wird auf einer EOSINT P395 der Firma EOS GmbH durchgeführt. Verarbeitet wird ein PA613-Pulver mit den Pulverkennwerten aus Tabelle 4. Das Pulver wird mit der Beschichtungsvorrichtung der EOSINT P395 aufgetragen. Die Schichtdicke beträgt 0,12mm.
Die Prozesstemperatur beträgt 198 °C. Die Belichtungsparameter sind: Laserleistung 36,0 W, Scangeschwindigkeit 4000 mm/s, Abstand Belichtungslinien 0,3 mm.

### Beispiel 16 (erfindungsgemäß)

Der Bauprozess wird auf einer EOSINT P395 der Firma EOS GmbH durchgeführt. Verarbeitet wird ein PA613-Pulver mit den Pulverkennwerten aus Tabelle 5. Das Pulver wird mit der Beschichtungsvorrichtung der EOSINT P395 aufgetragen. Die Schichtdicke beträgt 0,12mm. Die Prozesstemperatur beträgt 198 °C. Die Belichtungsparameter sind: Laserleistung 36,0 W, Scangeschwindigkeit 4000 mm/s, Abstand Belichtungslinien 0,3 mm.

### Beispiel 17 (erfindungsgemäß)

Der Bauprozess wird auf einer SPro60 HDHS der Firma 3d-systems durchgeführt. Verarbeitet wird ein PA613-Pulver mit den Pulverkennwerten aus Tabelle 5. Das Pulver wird mit der Beschichtungsvorrichtung der SPro60 HDHS aufgetragen. Die Prozesstemperatur beträgt 196°C. Die Temperatur im Pulvervorrat beträgt jeweils 135°C. Die Belichtungsparameter sind: Laserleistung 54,0 W, Scangeschwindigkeit 12000mm/s, Abstand Belichtungslinien 0,3mm.

**Tabelle 1 Pulverkennwerte von PA12-Pulver**

| | **Wert** | **Einheit** | **Prüfart/Prüfgerät/Prüfparameter** |
|---|---|---|---|
| Polymer | Polyamid 12 | | |
| Schüttdichte | 0,452 | g/cm³ | DIN EN ISO 60 |
| Korngröße d50 | 56 | µm | Malvern Mastersizer 2000, Trockenmessung, 20-40g Pulver mittels Scirocco Trockendispergiergerät zudosiert. Zuführrate Rüttelrinne 70%, Dispergierluftdruck 3 bar. Die Messzeit der Probe 5 Sekunden (5000 Einzelmessungen), Brechungsindex und Blaulichtwert mit 1,52 festgelegt. Auswertung über Mie-Theorie |
| Korngröße d10 | 32 | µm | Malvern Mastersizer 2000, Parameter siehe Korngröße d50 |
| Korngröße d90 | 82 | µm | Malvern Mastersizer 2000, Parameter siehe Korngröße d50 |
| Massenanteil einer Korngröße < 10,48µm | 3 | % | Malvern Mastersizer 2000, Parameter siehe Korngröße d50 |
| Rieselfähigkeit | 24 | s | DIN EN ISO 6186, Verfahren A, Durchmesser Düsenauslauf 15mm |
| Lösungsviskosität | 1,59 | - | ISO 307, Schott AVS Pro, Lösemittel m-Kresol sauer, Volumetrisches Verfahren, Doppelbestimmung, Lösetemperatur 100°C, Lösezeit 2h, Polymerkonzentration 5g/l Messtemperatur 25°C |
| BET (spez. Oberfläche) | 5,2 | m²/g | ISO 9277, Micromeritics TriStar 3000, Gasadsorption von Stickstoff, diskontinuierlichen volumetrischen Verfahren, 7 Messpunkte bei Relativdrücken P/P0 zwischen ca. 0,05 und ca. 0,20, Kalibrierung des Totvolumens mittels He(99,996 %), Probenvorbereitung 1 h bei 23°C + 16 h bei 80°C unter Vakuum, spez. Oberfläche auf die entgaste Probe bezogen, Auswertung erfolgte mittels Mehrpunktbestimmung |
| Schmelzpunkt 1. Aufheizung | 187 | °C | DIN 53765 DSC 7 v. Perkin Elmer Heiz/Kühlrate 20K/min |
| Rekristallisationstemperatur | 139 | °C | DIN 53765 DSC 7 v. Perkin Elmer Heiz/Kühlrate 20K/min |
| Materialkonditionierung | Material wird vor Verarbeitung/Analyse 24h bei 23°C und 50% Luftfeuchtigkeit gelagert | | |

**Tabelle 2 Pulverkennwerte von PA11-Pulver**

| | **Wert** | **Einheit** | **Prüfart/Prüfgerät/Prüfparameter** |
|---|---|---|---|
| Polymer | Polyamid 11 | | |
| Schüttdichte | 0,487 | g/cm³ | DIN EN ISO 60 |
| Korngröße d50 | 47 | µm | Malvern Mastersizer 2000, Trockenmessung, 20-40g Pulver mittels Scirocco Trockendispergiergerät zudosiert. Zuführrate Rüttelrinne 70%, Dispergierluftdruck 3 bar. Die Messzeit der Probe 5 Sekunden (5000 Einzelmessungen), Brechungsindex und Blaulichtwert mit 1,52 festgelegt. Auswertung über Mie-Theorie |
| Korngröße d10 | 19 | µm | Malvern Mastersizer 2000, Parameter siehe Korngröße d50 |
| Korngröße d90 | 77 | µm | Malvern Mastersizer 2000, Parameter siehe Korngröße d50 |
| Massenanteil einer Korngröße < 10,48µm | 5 | % | Malvern Mastersizer 2000, Parameter siehe Korngröße d50 |
| Rieselfähigkeit | 32 | s | DIN EN ISO 6186, Verfahren A, Durchmesser Düsenauslauf 15mm |
| Lösungsviskosität | 1,85 | - | ISO 307, Schott AVS Pro, Lösemittel *Schwefelsäure,* Volumetrisches Verfahren, Doppelbestimmung, Lösetemperatur 100°C, Lösezeit 2h, Polymerkonzentration 5g/l Messtemperatur 25°C |
| BET (spez. Oberfläche) | 0,7 | m²/g | ISO 9277, Micromeritics TriStar 3000, Gasadsorption von Stickstoff, diskontinuierlichen volumetrischen Verfahren, 7 Messpunkte bei Relativdrücken P/P0 zwischen ca. 0,05 und ca. 0,20, Kalibrierung des Totvolumens mittels He(99,996 %), Probenvorbereitung 1 h bei 23°C + 16 h bei 80°C unter Vakuum, spez. Oberfläche auf die entgaste Probe bezogen, Auswertung erfolgte mittels Mehrpunktbestimmung |
| Schmelzpunkt 1. Aufheizung | 205 | °C | DIN 53765 DSC 7 v. Perkin Elmer Heiz/Kühlrate 20K/min |
| Rekristallisationstemperatur | 149 | °C | DIN 53765 DSC 7 v. Perkin Elmer Heiz/Kühlrate 20K/min |
| Materialkonditionierung | Material wird vor Verarbeitung/Analyse 24h bei 23°C und 50% Luftfeuchtigkeit gelagert | | |

**Tabelle 3 Pulverkennwerte von PA613-Pulver**

| | **Wert** | **Einheit** | **Prüfart/Prüfgerät/Prüfparameter** |
|---|---|---|---|
| Polymer | PA613 | | |
| Schüttdichte | 0,470 | g/cm³ | DIN EN ISO 60 |
| Korngröße d50 | 70 | µm | Malvern Mastersizer 2000, Trockenmessung, 20-40g Pulver mittels Scirocco Trockendispergiergerät zudosiert. Zuführrate Rüttelrinne 70%, Dispergierluftdruck 3 bar. Die Messzeit der Probe 5 Sekunden (5000 Einzelmessungen), Brechungsindex und Blaulichtwert mit 1,52 festgelegt. Auswertung über Mie-Theorie |
| Korngröße d10 | 30 | µm | Malvern Mastersizer 2000, Parameter siehe Korngröße d50 |
| Korngröße d90 | 97 | µm | Malvern Mastersizer 2000, Parameter siehe Korngröße d50 |
| Massenanteil einer Korngröße < 10,48µm | 6 | % | Malvern Mastersizer 2000, Parameter siehe Korngröße d50 |
| Rieselfähigkeit | 60 | s | DIN EN ISO 6186, Verfahren A, Durchmesser Düsenauslauf 15mm |
| Lösungsviskosität | 1,73 | - | ISO 307, Schott AVS Pro, Lösemittel *Schwefelsäure,* Volumetrisches Verfahren, Doppelbestimmung, Lösetemperatur 100°C, Lösezeit 2h, Polymerkonzentration 5g/l Messtemperatur 25°C |
| BET (spez. Oberfläche) | 6,7 | m²/g | ISO 9277, Micromeritics TriStar 3000, Gasadsorption von Stickstoff, diskontinuierlichen volumetrischen Verfahren, 7 Messpunkte bei Relativdrücken P/P0 zwischen ca. 0,05 und ca. 0,20, Kalibrierung des Totvolumens mittels He(99,996 %), Probenvorbereitung 1 h bei 23°C + 16 h bei 80°C unter Vakuum, spez. Oberfläche auf die entgaste Probe bezogen, Auswertung erfolgte mittels Mehrpunktbestimmung |
| Schmelzpunkt 1. Aufheizung | 211 | °C | DIN 53765 DSC 7 v. Perkin Elmer Heiz/Kühlrate 20K/min |
| Rekristallisationstemperatur | 160 | °C | DIN 53765 DSC 7 v. Perkin Elmer Heiz/Kühlrate 20K/min |
| Materialkonditionierung | Material wird vor Verarbeitung/Analyse 24h bei 23°C und 50% Luftfeuchtigkeit gelagert | | |

**Tabelle 4 Pulverkennwerte von PA613-Pulver**

| | **Wert** | **Einheit** | **Prüfart/Prüfgerät/Prüfparameter** |
|---|---|---|---|
| Polymer | PA613 | | |
| Schüttdichte | 0,450 | g/cm³ | DIN EN ISO 60 |
| Korngröße d50 | 62 | µm | Malvern Mastersizer 2000, Trockenmessung, 20-40g Pulver mittels Scirocco Trockendispergiergerät zudosiert. Zuführrate Rüttelrinne 70%, Dispergierluftdruck 3 bar. Die Messzeit der Probe 5 Sekunden (5000 Einzelmessungen), Brechungsindex und Blaulichtwert mit 1,52 festgelegt. Auswertung über Mie-Theorie |
| Korngröße d10 | 46 | µm | Malvern Mastersizer 2000, Parameter siehe Korngröße d50 |
| Korngröße d90 | 82 | µm | Malvern Mastersizer 2000, Parameter siehe Korngröße d50 |
| Massenanteil einer Korngröße < 10,48µm | 1 | % | Malvern Mastersizer 2000, Parameter siehe Korngröße d50 |
| Rieselfähigkeit | 20 | s | DIN EN ISO 6186, Verfahren A, Durchmesser Düsenauslauf 15mm |
| Lösungsviskosität | 1,65 | - | ISO 307, Schott AVS Pro, Lösemittel *Schwefelsäure,* Volumetrisches Verfahren, Doppelbestimmung, Lösetemperatur 100°C, Lösezeit 2h, Polymerkonzentration 5g/l Messtemperatur 25°C |
| BET (spez. Oberfläche) | 9 | m²/g | ISO 9277, Micromeritics TriStar 3000, Gasadsorption von Stickstoff, diskontinuierlichen volumetrischen Verfahren, 7 Messpunkte bei Relativdrücken P/P0 zwischen ca. 0,05 und ca. 0,20, Kalibrierung des Totvolumens mittels He(99,996 %), Probenvorbereitung 1 h bei 23°C + 16 h bei 80°C unter Vakuum, spez. Oberfläche auf die entgaste Probe bezogen, Auswertung erfolgte mittels Mehrpunktbestimmung |
| Schmelzpunkt 1. Aufheizung | 209 | °C | DIN 53765 DSC 7 v. Perkin Elmer Heiz/Kühlrate 20K/min |
| Rekristallisationstemperatur | 168 | °C | DIN 53765 DSC 7 v. Perkin Elmer Heiz/Kühlrate 20K/min |
| Materialkonditionierung | Material wird vor Verarbeitung/Analyse 24h bei 23°C und 50% Luftfeuchtigkeit gelagert | | |

**Tabelle 5 Pulverkennwerte von PA613-Pulver**

| | **Wert** | **Einheit** | **Prüfart/Prüfgerät/Prüfparameter** |
|---|---|---|---|
| Polymer | PA613 | | |
| Schüttdichte | 0,436 | g/cm³ | DIN EN ISO 60 |
| Korngröße d50 | 61 | µm | Malvern Mastersizer 2000, Trockenmessung, 20-40g Pulver mittels Scirocco Trockendispergiergerät zudosiert. Zuführrate Rüttelrinne 70%, Dispergierluftdruck 3 bar. Die Messzeit der Probe 5 Sekunden (5000 Einzelmessungen), Brechungsindex und Blaulichtwert mit 1,52 festgelegt. Auswertung über Mie-Theorie |
| Korngröße d10 | 48 | µm | Malvern Mastersizer 2000, Parameter siehe Korngröße d50 |
| Korngröße d90 | 78 | µm | Malvern Mastersizer 2000, Parameter siehe Korngröße d50 |
| Massenanteil einer Korngröße < 10,48µm | 0 | % | Malvern Mastersizer 2000, Parameter siehe Korngröße d50 |
| Rieselfähigkeit | 26 | s | DIN EN ISO 6186, Verfahren A, Durchmesser Düsenauslauf 15mm |
| Lösungsviskosität | 1,59 | - | ISO 307, Schott AVS Pro, Lösemittel *Schwefelsäure,* Volumetrisches Verfahren, Doppelbestimmung, Lösetemperatur 100°C, Lösezeit 2h, Polymerkonzentration 5g/l Messtemperatur 25°C |
| BET (spez. Oberfläche) | 9,5 | m²/g | ISO 9277, Micromeritics TriStar 3000, Gasadsorption von Stickstoff, diskontinuierlichen volumetrischen Verfahren, 7 Messpunkte bei Relativdrücken P/P0 zwischen ca. 0,05 und ca. 0,20, Kalibrierung des Totvolumens mittels He(99,996 %), Probenvorbereitung 1 h bei 23°C + 16 h bei 80°C unter Vakuum, spez. Oberfläche auf die entgaste Probe bezogen, Auswertung erfolgte mittels Mehrpunktbestimmung |
| Schmelzpunkt 1. Aufheizung | 209 | °C | DIN 53765 DSC 7 v. Perkin Elmer Heiz-/Kühlrate 20K/min |
| Rekristallisationstemperatur | 179 | °C | DIN 53765 DSC 7 v. Perkin Elmer Heiz-/Kühlrate 20K/min |
| Materialkonditionierung | Material wird vor Verarbeitung/Analyse 24h bei 23°C und 50% Luftfeuchtigkeit gelagert | | |

**Tabelle 6**

| Beispiel | Polyamid gemäß Tab. | E-Modul [MPa] | Zugfestigkeit [MPa] | Reißdehnung [%] |
|---|---|---|---|---|
| 1 (nicht erfindungsgemäß) | 1 | 1746 | 46,3 | 19,5 |
| 2 (nicht erfindungsgemäß) | 1 | 1793 | 46.8 | 17,2 |
| 3 (nicht erfindungsgemäß) | 1 | 1679 | 45,6 | 16,8 |
| 4 (nicht erfindungsgemäß) | 1 | 1796 | 46,7 | 18,1 |
| 5 (nicht erfindungsgemäß) | 1 | 1807 | 46,1 | 16,7 |
| 6 (nicht erfindungsgemäß) | 1 | 1672 | 45,2 | 17,4 |
| 7 (nicht erfindungsgemäß) | 2 | 1023 | 38,2 | 41,0 |
| 8 (nicht erfindungsgemäß) | 2 | 1240 | 42,6 | 34,1 |
| 9 (erfindungsgemäß) | 3 | 2318 | 60,5 | 38,3 |
| 10 (erfindungsgemäß) | 3 | 2347 | 61,3 | 35,4 |
| 11 (erfindungsgemäß) | 3 | 2047 | 58,6 | 33,1 |
| 12 (erfindungsgemäß) | 3 | 2298 | 60,9 | 34,2 |
| 13 (erfindungsgemäß) | 4 | 2273 | 59,7 | 33,7 |
| 14 (erfindungsgemäß) | 4 | 2251 | 58,7 | 33,1 |
| 15 (erfindungsgemäß) | 4 | 2368 | 59,8 | 35,2 |
| 16 (erfindungsgemäß) | 5 | 2287 | 60,3 | 32,6 |
| 17 (erfindungsgemäß) | 5 | 2164 | 59,8 | 33,5 |

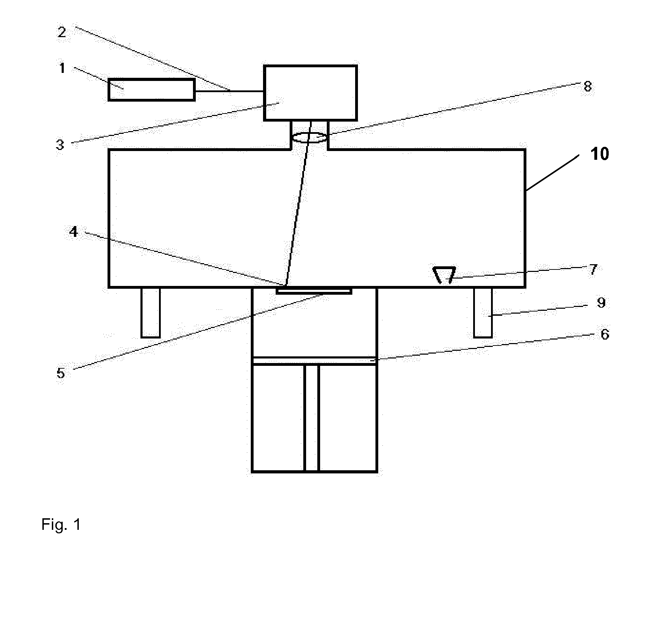

## Patentansprüche

1. Verfahren zur schichtweisen Herstellung von dreidimensionalen Objekten, **dadurch gekennzeichnet, dass** ein Pulvermaterial enthaltend Polyamid PA613 verwendet wird.

2. Verfahren nach Anspruch 1, **dadurch gekennzeichnet, dass** es in einer Vorrichtung durchgeführt wird, welche einen Bauraum (10) mit einer höheneinstellbaren Bauplattform (6), eine Vorrichtung (7) zum Aufbringen einer Schicht des Polyamids auf die Bauplattform (6), eine Bestrahlungseinrichtung umfassend eine elektromagnetische Strahlung emittierende Strahlungsquelle (1), eine Steuerungseinheit (3) und eine im Strahlengang der elektromagnetischen Strahlung befindliche Linse (8) umfasst.

3. Verfahren nach einem der vorherigen Ansprüche, **dadurch gekennzeichnet, dass** das Polyamid PA613 in einem Anteil von mindestens 47 Gew.-%, bezogen auf das Gesamtgewicht des Pulvermaterials, enthalten ist.

4. Verfahren nach einem der vorherigen Ansprüche, **dadurch gekennzeichnet, dass** das Polyamid PA613 in einem Anteil von mindestens 75 Gew.-%, bezogen auf das Gesamtgewicht des Pulvermaterials, enthalten ist.

5. Verfahren nach einem der vorherigen Ansprüche, **dadurch gekennzeichnet, dass** das Polyamid ein zahlenmittleres Molekulargewicht von 8000 bis 50000 g/mol aufweist.

6. Verfahren nach einem der vorherigen Ansprüche, **dadurch gekennzeichnet, dass** das Polyamid eine Schüttdichte von 0,35 bis 0,55 g/cm³ aufweist.

7. Verfahren nach einem der vorherigen Ansprüche, **dadurch gekennzeichnet, dass** das Polyamid eine Korngröße d50 von 30 bis 80 µm aufweist.

8. Verfahren nach einem der vorherigen Ansprüche, **dadurch gekennzeichnet, dass** das Polyamid eine Rieselfähigkeit von maximal 70 s aufweist.

9. Verfahren nach einem der vorherigen Ansprüche, **dadurch gekennzeichnet, dass** das Polyamid eine Lösungsviskosität von 1,5 bis 2,2 aufweist.

10. Verfahren nach einem der vorherigen Ansprüche, **dadurch gekennzeichnet, dass** das Polyamid eine BET-Oberfläche von maximal 30 m²/g aufweist.

11. Verfahren nach einem der vorherigen Ansprüche, **dadurch gekennzeichnet, dass** das Polyamid einen Schmelzpunkt von 205 bis 215 °C aufweist.

12. Verfahren nach Anspruch 1 **dadurch gekennzeichnet, dass** die Verarbeitungstemperatur mindestens 190°C beträgt.

13. Formkörper, hergestellt nach einem Verfahren der Ansprüche 1 bis 3.

14. Formkörper nach Anspruch 13, **dadurch gekennzeichnet, dass** sie ein E-Modul von größer als 2000 MPa und eine Reißdehnung von größer als 30 % aufweisen.

15. Verwendung eines Pulvermaterials enthaltend Polyamid PA613, welches in einem der Ansprüche 1 bis 12 definiert ist, zur schichtweisen Herstellung dreidimensionaler Objekte.
